# EUROPÄISCHE PATENTSCHRIFT

(11) **EP 2 508 814 B1**
(45) Veröffentlichungstag und Bekanntmachung des Hinweises auf die Patenterteilung: **14.03.2018**
(21) Anmeldenummer: 11002958.4
(22) Anmeldetag: 08.04.2011
(51) Int. Cl.: F24F 12/00, F28D 9/00, F28F 17/00

(54) **Lüftungseinheit**
Ventilation unit
Unité d'aération

(43) Veröffentlichungstag der Anmeldung: 10.10.2012
(73) Patentinhaber: Zehnder Group International AG, 5722 Gränichen (CH)
(72) Erfinder: de Jong, Christiaan, 7722 AX Dalfsen (NL)
(74) Vertreter: Rausch Wanischeck-Bergmann Brinkmann

(56) Entgegenhaltungen:
- EP-A2- 1 696 184
- WO-A2-2007/080162
- FR-A1- 2 370 238
- FR-A1- 2 400 685
- US-A- 5 257 736

## Beschreibung

Die Erfindung betrifft eine Lüftungseinheit zur Versorgung eines Raums oder eines Teils hiervon mit Zuluft, insbesondere Frischluft, im Austausch gegen Abluft, mit einer Ventilatoreinrichtung, einem Wärmetauscher und einer Heizeinrichtung für die Zuluft. Ferner betrifft die Erfindung ein Verfahren zum Betrieb einer Lüftungseinheit der vorgenannten Art, das heißt zur Versorgung eines Raums oder eines Teils hiervon mit Zuluft, insbesondere Frischluft, und zwar im Austausch gegen Abluft.

Lüftungseinheiten der vorgenannten Art sind aus dem Stand der Technik an sich bekannt, weshalb es eines gesonderten druckschriftlichen Nachweises an dieser Stelle nicht bedarf.

Es ist grundsätzlich bekannt, einen Raum, beispielsweise einen Wohnraum, oder einen Teil hiervon zur Sicherstellung einer bestimmten Raumluftqualität mit Zuluft, insbesondere mit von außerhalb des Raumes stammender Frischluft zu versorgen. Im Austausch gegen die zugeführte Frischluft ist dem Raum Abluft zu entnehmen. Dabei kann ein solcher Austausch von Frischluft gegen Abluft kontinuierlich oder diskontinuierlich durchgeführt werden.

Sowohl für die Zuführung von Zuluft als auch für die Abführung von Abluft kommen typischerweise Ventilatoreinrichtungen zur Anwendung. Diese können zur Vermeidung einer möglichen Geräuschbelästigung auch gekapselt ausgeführt und/oder raumaußenseitig ausgebildet sein.

Zum Zwecke der Wärmerückgewinnung kommt darüber hinaus typischerweise ein Wärmetauscher zum Einsatz. Dieser kann beispielsweise als Gegenstromwärmetauscher ausgebildet sein und dient dazu, der abzuführenden Abluft, das heißt der abzuführenden Raumluft Wärme in Form von Wärmeenergie zu entnehmen, die auf die dem Raum zuzuführende Zuluft übertragen wird, indem innerhalb des Wärmetauschers eine Aufwärmung der Zuluft erfolgt. Um zu vermeiden, dass es insbesondere an kalten Wintertagen in Folge der Zuführung sehr kühler Frischluft zu Vereisungen innerhalb des Wärmetauschers und/oder anderen luftführenden Bauteilen der Lüftungseinheit kommt, ist es aus dem Stand der Technik ferner bekannt, entsprechende Heizeinrichtungen für die Zuluft vorzusehen. Derlei Heizeinrichtungen dienen dazu, die insbesondere in den kalten Wintermonaten sehr kühle Frischluft auf eine Temperatur vorzuheizen, die einer Vereisung der luftführenden Baukomponenten, insbesondere des Wärmetauschers, der Lüftungseinheit entgegenwirkt. Die Heizeinrichtung dient insofern als Frostschutzsicherung. Eine Anordnung gemäß dem Oberbegriff von Anspruch 1 ist aus der Druckschrift US 5 257 736 A bekannt. Obgleich sich Lüftungseinheiten der vorbeschriebenen Art im alltäglichen Praxiseinsatz bewährt haben, besteht Verbesserungsbedarf, insbesondere mit Blick auf einen noch weiter verminderten Energieverbrauch. Es ist deshalb die **Aufgabe** der Erfindung, eine Lüftungseinheit vorzuschlagen, die aufgrund ihrer konstruktiven Ausgestaltung die Einsparung von Energie ermöglicht. Zudem soll ein ebenfalls energiesparendes Verfahren zum Betrieb einer solchen Lüftungseinheit vorgeschlagen werden.

Zur **Lösung** dieser Aufgabe wird vorrichtungsseitig eine Lüftungseinheit gemäß Anspruch 1 benutzt. Der erfindungsgemäßen Ausgestaltung liegt die Grunderkenntnis zugrunde, dass das Einfrieren des Wärmetauschers und/oder anderer luftführender Komponenten der Lüftungseinheit infolge der Zuführung sehr kalter Frischluft auch von der Luftfeuchtigkeit in der über die Lüftungseinheit nach außen abzuführenden Abluft abhängt. Dabei steigt das Risiko der Vereisung mit zunehmender Luftfeuchtigkeit in der Abluft.

Die erfindungsgemäße Lüftungseinheit verfügt über eine Messeinrichtung, die es mittels entsprechender Sensoren gestattet, Temperatur und Luftfeuchtigkeit zu erfassen. Es werden dabei bevorzugter Weise zumindest die Temperatur der Zuluft und die Luftfeuchtigkeit der Abluft detektiert. Es können aber auch sowohl die Temperatur von Zuluft und Abluft als auch die Luftfeuchtigkeit von Zuluft und Abluft erfasst werden.

Die Schaltung der Heizeinrichtung zum Zwecke des Frostschutzes erfolgt erfindungsgemäß in Abhängigkeit der detektierten Messwerte, das heißt der detektierten Temperaturen und Luftfeuchtigkeiten. Es ist zu diesem Zweck eine Regelungseinrichtung vorgesehen, die mit einer Vergleichsschaltung die von der Messeinrichtung detektierten Messwerte mit vorgebbaren Vergleichswerten vergleicht und in Abhängigkeit des Vergleichsergebnisses der Vergleichsschaltung die Heizeinrichtung für die Zuluft steuert, wobei bevorzugter Weise ein stufenloser Betrieb der Heizeinrichtung möglich ist.

Anderes als bei aus dem Stand der Technik bekannten Lüftungseinheiten erfolgt ein Betrieb der Heizeinrichtung für die Zuluft nicht nur in Abhängigkeit der Temperatur der Zuluft. Als Betriebsparameter wird zumindest die Luftfeuchtigkeit der Abluft mitberücksichtigt. Dies führt in vorteilhafterweise dazu, dass die Heizeinrichtung nicht unnötig betrieben wird, denn die Vereisungsgefahr ergibt sich im Wesentlichen in Abhängigkeit der Luftfeuchtigkeit der Abluft. Ist die Luftfeuchtigkeit innerhalb der Abluft vergleichsweise gering, kann sich also kaum Kondensat innerhalb der luftführenden Bauelemente der Lüftungseinheit ansammeln, sinkt die Vereisungsgefahr auch bei sinkenden Temperaturen bezüglich der Zuluft. Die Zuschaltung der Heizeinrichtung erfolgt bei der erfindungsgemäßen Ausgestaltung nach also nur dann, wenn die Zulufttemperatur und die Abluftfeuchtigkeit in einem solchen Verhältnis zueinander stehen, dass tatsächlich die Gefahr der Vereisung besteht. Dank der erfindungsgemäßen Ausgestaltung ist es deshalb in vorteilhafterweise möglich, den Betrieb der Heizeinrichtung zum Aufheizen der Zuluft zwecks Frostschutz auf das tatsächlich nötige Minimum zu beschränken. Es lässt sich so in vorteilhafterweise ein unnötiger Energieverbrauch vermeiden, womit sich der Betrieb der erfindungsgemäßen Lüftungseinheit im Unterschied zum Stand der Technik als energieeffizienter erweist.

Die erfindungsgemäße Ausgestaltung erweist sich insbesondere dann als vorteilhaft, wenn es zu größeren Schwankungen hinsichtlich der Luftfeuchtigkeit innerhalb der Abluft kommt. Solche Schwankungen können insbesondere dann auftreten, wenn eine Nutzung des über die Lüftungseinheit mit Frischluft versorgten Raumes nicht stattfindet, was beispielsweise bei Geschäftsräumen insbesondere am Wochenende oder bei Wohnräumen insbesondere während der Urlaubszeit der Fall ist. Innerhalb solcher Zeitphasen findet eine Raumnutzung nicht statt, was in der Konsequenz dazu führt, dass die Luftfeuchtigkeit innerhalb der Raumluft sinkt. Damit sinkt auch die Gefahr möglicher Vereisungen, so dass ein nur noch verminderter Betrieb der Heizeinrichtung erforderlich ist. Findet hingegen wieder eine bestimmungsgemäße Raumnutzung statt, so steigt der Feuchtigkeitsgehalt innerhalb der Raumluft, was dann wiederum einen gesteigerten Betrieb der Heizeinrichtung zum Zwecke des Frostschutzes zur Folge hat. Mittels der erfindungsgemäß vorgesehenen Regelungseinrichtung können diese Unterschiede in der Raumnutzung erfasst und für einen angepassten Betrieb der Heizeinrichtung ausgewertet werden.

Verfahrensseitig wird der Erfindung ein Verfahren gemäß Anspruch 5 benutzt. Gemäß der erfindungsgemäßen Verfahrensdurchführung erfolgt ein Betrieb der Heizeinrichtung zur Aufheizung der Zuluft insbesondere zum Zwecke des Frostschutzes nicht nur in Abhängigkeit der Temperatur der Zuluft, das heißt der von außen in den Raum zugeführten Luft, sondern auch in Abhängigkeit der Luftfeuchte, das heißt des Feuchtigkeitsgehalts der Abluft, das heißt der aus dem Raum abgeführten Raumluft. Auf diese Weise kann ein energieeffizienter Betrieb der Heizeinrichtung durchgeführt werden, da eine Einschaltung der Heizeinrichtung zum Zwecke des Frostschutzes tatsächlich nur dann vorgenommen wird, wenn die in der Abluft enthaltene Luftfeuchtigkeit bzw. das aus der Abluft innerhalb der Lüftungseinheit auskondensierende Wasser tatsächlich in einer solchen Menge vorliegt, dass die Gefahr von Vereisungen besteht. Die erfindungsgemäße Ausgestaltung erlaubt in diesem Zusammenhang zudem eine stufenlose Anpassung der Heizeinrichtung an die Betriebsparameter, so dass unter Energiegesichtspunkten ein optimierter Betrieb der Heizeinrichtung gestattet ist.

Die Erfindung betrifft ferner eine Steuerung für eine Lüftungseinheit mit wenigstens einer Ventilatoreinrichtung und wenigstens einem Wärmetauscher sowie ein Verfahren zur Steuerung einer eine Ventilatoreinrichtung und einen Wärmetauscher umfassenden Lüftungseinheit.

Im Stand der Technik ist es bekannt, den Ventilator bzw. die Ventilatoreinrichtung einer Lüftungsanlage in Abhängigkeit vom gewünschten Volumenstrom zu steuern. Üblicherweise hat eine derartige Steuerung eine sogenannte Stufenregelung, d.h. es werden einstellbare Stufen vorgegeben, beispielweise 50 m³/h, 150 m³/h, 500 m³/h.

Es ist bekannt, im Bereich des Ventilators Sensorik für die Messung des Volumenstroms vorzusehen und zur Drehzahlregelung auszuwerten. Alternativ zur Messung des Volumenstroms im Bereich des Ventilators kann dieser auch im Bereich einer Luftleitung gemessen werden.

Es ist auch bekannt, die Temperatur der Förderluft zu messen, da auch die Temperatur als Sollgröße vorgegeben sein kann, beispielsweise in auch zur Beheizung vorgesehenen Lüftungsanlagen. Die Temperatur wird üblicherweise in einer Luftleitung gemessen, durch welche die Luft in den zu belüftenden Raum geführt wird.

Im Stand der Technik ist es ferner bekannt, die jeweiligen Sensoren an den dafür vorgesehenen Orten voneinander unabhängig anzuordnen und die Leitungen zu entsprechend positionierten Schnittstellen entsprechender Schaltungsplatinen zu führen. Diese Schaltungsplatinen können zentral oder dezentral im Gerät angeordnet sein und sind ihrerseits wiederum mit einer Auswerteelektronik verbunden. Daraus ergibt sich ein erheblicher Montage- und Wartungsaufwand im Falle von Fehlern. Darüber hinaus werden die Größen diskret ermittelt und ausgewertet und die Regelung ist oft durch ungünstig liegende Einzelwerte ungenau oder sehr komplex.

Die erfindungsgemäße Ausgestaltung sieht die Anordnung von drei ortsnah zueinander positionierten Sensoren vor, nämlich für die Lufttemperatur, die Volumenstrommessung und die relative Luftfeuchte. Diese Sensoren können im Idealfall in einer Modulbaugruppe angeordnet sein. Die Sensoren sind mit einer Schaltungsplatine verbunden, die ihrerseits mit der Steuerelektronik in Verbindung steht. Die Schaltungsplatine kann in der Modulbaugruppe angeordnet sein oder mit der Sensormodulbaugruppe über eine einfache Datenleitung in Verbindung stehen. Im letztgenannten Fall kann die Platine integraler Bestandteil der Steuerung selbst sein.

In besonders vorteilhafter Weise ist auch die Drehzahlregelung des Ventilators modular schaltungstechnisch integriert

Mit der erfindungsgemäßen Ausgestaltung ist es möglich, die Enthalpie des Luftstromes zu ermitteln und auf diese Weise eine deutlich präzisere und erheblich verbesserte Steuerung auszubilden, die darüber hinaus auch erheblich vereinfacht sein kann.

Darüber hinaus werden die Sensoren und/oder die Schaltungen zu Gruppen zusammengefasst, so dass Montage- und Wartungsaufwand deutlich reduziert sind.

Die mittels der Sensoren erfassten Messwerte können in einer Vergleichsschaltung mit vorgebbaren Sollwerten verglichen werden. In Abhängigkeit der so ermittelten Vergleichswerte kann dann eine Steuerung der Lüftungseinheit vorgenommen werden, beispielsweise durch entsprechende Anpassung der Ventilatordrehzahl. Auf diese Weise wird eine Regelung erzielt, die es gestattet, die durch die Lüftungseinheit bewirkte Luftströmung zur Erzielung eines angenehmen Raumklimas zu optimieren.

Mit der Erfindung wird deshalb auch ein Verfahren zur Steuerung einer einen Ventilator bzw. eine Ventilatoreinrichtung und einem Wärmetauscher umfassenden Lüftungseinheit vorgeschlagen, bei dem der vom Ventilator geförderte Luftstrom hinsichtlich seines Strömungsvolumens, seiner Temperatur und seiner Luftfeuchte gemessen wird. Die auf diese Weise erfassten Messwerte werden sodann in einer Vergleichsschaltung mit vorgebbaren Sollwerten verglichen, wobei in Abhängigkeit der ermittelten Vergleichswerte eine Anpassung der Ventilatordrehzahl erfolgt.

Die erfassten Messwerte und/oder die ermittelten Vergleichswerte können im Übrigen dazu genutzt werden, die absolute Luftfeuchte einerseits sowie die absolute Enthalpie andererseits bestimmen zu können, und zwar sowohl auf der einen Luftseite der Lüftungseinheit als auch auf der anderen Luftseite der Lüftungseinheit. Dabei wird die eine Luftseite der Lüftungseinheit typischerweise durch die Außenatmosphäre, das heißt die Außenluft und die andere Luftseite der Lüftungseinheit durch die Innenluft, das heißt die in einem Raum oder einem Teil hiervon befindliche Innenluft gebildet. Dabei kann mittels der erfindungsgemäßen Einrichtung und/oder dem erfindungsgemäß vorgesehenen Verfahren sichergestellt werden, dass die Unterschiede zwischen Außenluft und Innenluft hinsichtlich Feuchtigkeit und Enthalpie möglichst gering ausfallen, so dass die Ausbildung einer von einem Nutzer als angenehm empfundenen Innenluft, das heißt die Aufrechterhaltung einer hohen Innenluftqualität sichergestellt ist. Verfahrensseitig wird deshalb mit der Erfindung ein Verfahren vorgeschlagen, bei dem anhand der erfassten Messwerte und/oder der ermittelten Vergleichswerte die Venitlatordrehzahl derart gewählt wird, dass sich eine möglichst geringe Luftfeuchtigkeitsdifferenz und/oder eine möglichst geringe Enthalpiedifferenz zwischen den beiden Luftseiten der Lüftungseinheit einstellt.

Die Ausgestaltung nach der Erfindung ermöglicht darüber hinaus in vorteilhafter Weise eine CO₂-Regelung. Die mit der erfindungsgemäßen Ausgestaltung mögliche CO₂-Regelung macht sich zunutze, dass der CO₂-Austoß einer Person proportional zu deren Beeinflussung der Raumfeuchtigkeit ist. Die mit der Erfindung vorgeschlagene Feuchtigkeitsmessung erlaubt insofern einen indirekten Rückschluss auf den CO₂-Gehalt auf der Raumluftseite der Lüftungseinheit. In vorteilhafter Weise erlaubt es die Erfindung insofern, Luftfeuchtigkeitsgrenzwerte auf Einhaltung zu überprüfen, was indirekt eine CO₂-Überwachung zur Folge hat, so dass über die erfindungsgemäß vorgesehene Luftfeuchtigkeitsmessung indirekt auch die Einhaltung von vorgebbaren CO₂-Grenzwerten gestattet wird.

Mittels der erfindungsgemäßen Einrichtung kann darüber hinaus die im Wärmetauscher der Lüftungseinheit vorhandene Luftfeuchte bestimmt werden. Zum Zwecke des Frostschutzes ist es typischerweise vorgesehen, im Wärmetauscher Heizeinrichtungen vorzusehen, die im Falle der Frostgefahr zur Lufterwärmung eingeschaltet werden. Tatsächlich besteht eine Frostgefahr aber nur dann, wenn ein bestimmter Feuchtigkeitsgehalt vorhanden ist, da selbst bei Temperaturen weit unter dem Gefrierpunkt eine Frostgefahr nur dann besteht, wenn die im Wärmetauscher befindliche Luft eine bestimmte Luftfeuchte aufweist. Die Bestimmung der Luftfeuchte im Wärmetauscher gestattet es mithin, in Abhängigkeit der ebenfalls bestimmbaren Lufttemperatur eine Luftaufheizung zum Zwecke des Frostschutzes tatsächlich nur dann vornehmen zu müssen, wenn aufgrund der bestehenden Luftfeuchte eine tatsächliche Frostgefahr besteht. Anderenfalls kann im Unterschied zum Stand der Technik eine Lufterwärmung zum Zwecke des Frostschutzes unterbleiben, womit in vorteilhafter Weise ein unnötiger Energieverbrauch unterbunden ist.

Die erfindungsgemäß vorgesehenen Messeinrichtungen bzw. das erfindungsgemäß vorgesehene Verfahren gestatteten es darüber hinaus, Leckagen im System auf einfache Weise feststellen zu können und zwar insbesondere über einen Enthalpievergleich zwischen der zuströmenden Luft einerseits und der abströmenden Luft andererseits. Dabei hat sich ein Vergleich der Enthalpie von zuströmender Luft einerseits und abströmender Luft andererseits als sehr viel zuverlässiger herausgestellt, als beispielsweise Volumenstrommessungen. Auch insofern erweist sich die erfindungsgemäße Ausgestaltung deshalb als vorteilhaft.

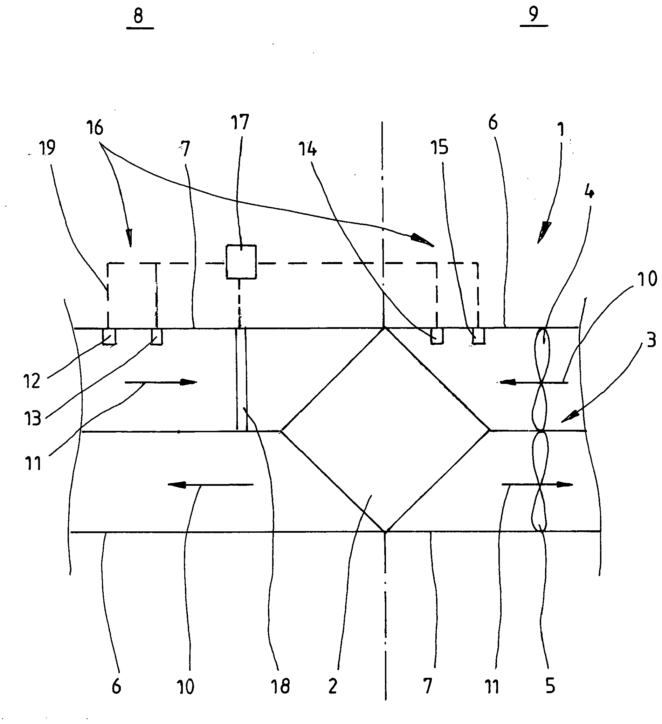

Weitere Vorteile und Merkmale der Erfindung ergeben sich aus der nachfolgenden Beschreibung anhand der einzigen Figur 1, die in schematischer Darstellung eine erfindungsgemäße Lüftungseinheit zeigt.

Figur 1 lässt in schematischer Darstellung eine Lüftungseinheit 1 nach der Erfindung erkennen. Die Lüftungseinheit 1 dient dazu, Zuluft von der einen Luftseite der Lüftungseinheit 1, nämlich der Zuluftseite 8 anzusaugen und zur anderen Luftseite der Lüftungseinheit 1, nämlich der Abluft- oder Raumseite 9 zu fördern, und zwar im Austausch gegen Abluft, die in umgekehrter Richtung von der Abluftseite 9 zur Zuluftseite 8 gefördert wird. In an sich bekannter Weise dient die dargestellte Lüftungseinheit 1 also dazu, einen in der Figur 1 nicht näher dargestellten Raum oder einen Teil hiervon im Austausch gegen verbrauchte Raumluft mit Zuluft, vorzugsweise mit Frischluft zu versorgen.

Zum Zwecke der Zuführung von Zuluft einerseits bzw. der Abführung von Abluft andererseits ist eine Ventilatoreinrichtung 3 vorgesehen. Im gezeigten Ausführungsbeispiel umfasst die Ventilatoreinrichtung 3 zwei Ventilatoren 4 und 5, wobei der Ventilator 4 dazu dient, die Abluft zu fördern, wohingegen der Ventilator 5 für die Förderung der Zuluft vorgesehen ist. Dementsprechend sind auch der Ventilator 4 im Abluftkanal 6 und der Ventilator 5 im Zuluftkanal 7 angeordnet.

Der Abluftstrom der Abluft und der Zuluftstrom der Zuluft werden im Wärmetauscher 2 im Gegenstrom aneinander vorbeigeführt. Dabei findet zum Zwecke der Energieeinsparung ein Wärmetransfer innerhalb des Wärmetauschers 2 statt, und zwar von der Abluft auf die Frischlust, falls die Frischluft kühler als die Abluft ist, bzw. in umgekehrter Richtung, das heißt von der Frischluft auf die Abluft, sofern die Frischluft wärmer als die Abluft ist. Ein Wärmeübergang von der Abluft auf die Frischluft findet insbesondere bei vergleichsweiser kühler Frischluft, das heißt während der kühlen Jahreszeit statt, wohingegen ein Wärmetransfer in umgekehrter Richtung, das heißt von wärmerer Frischluft auf kühlere Abluft insbesondere während wärmerer Jahreszeiten, beispielsweise im Sommer stattfindet. Die durch die Ventilatoreinrichtung 3 bewirkte Luftströmung sowohl hinsichtlich der Zuluft als auch bezüglich der Abluft ist in Figur 1 durch die Pfeile 10 und 11 kenntlich gemacht, wobei der Pfeil 10 die Strömungsrichtung der Abluft kennzeichnet und der Pfeil 11 die Strömungsrichtung der Zuluft.

Die Lüftungseinheit 1 verfügt desweiteren über eine Heizeinrichtung 8, die in Strömungsrichtung der Zuluft dem Wärmetauscher 2 vorgeschaltet ist. Sinn und Zweck der Heizeinrichtung 18 ist es, die Zuluft im Bedarfsfall aufwärmen zu können, und zwar zum Zwecke des Frostschutzes, um insbesondere an kalten Wintertagen ein Einfrieren des Wärmetauschers 2 und/oder anderer luftführender Baukomponenten der Lüftungseinheit, wie zum Beispiel den Abluftkanälen 6 oder den Zuluftkanälen 7 verhindern zu können.

Die erfindungsgemäße Ausgestaltung verfügt über eine Messeinrichtung 16, die zumindest einen Temperatursensor für die Zuluft und einen Luftfeuchtigkeitssensor für die Abluft umfasst. Gemäß dem gezeigten Ausführungsbeispiel sind ein Temperatursensor 12 und ein Luftfeuchtigkeitssensor 13 hinsichtlich der Zuluft sowie ein Temperatursensor 17 und ein Luftfeuchtigkeitssensor 15 für die Abluft vorgesehen. Die Sensoren 12 und 13 sind in Strömungsrichtung der Zuluft im Zuluftkanal 7 vor dem Wärmetauscher 2 angeordnet. Die Sensoren 14 und 15 bezüglich der Abluft sind in Strömungsrichtung der Abluft dem Wärmetauscher 2 ebenfalls vorgeschaltet, wie Figur 1 deutlich erkennen lässt.

Die Sensoren 12, 13, 14 und 15 stehen in kommunikationstechnischer Verbindung 19 mit einer Regelungseinrichtung 17. Die Regelungseinrichtung 17 ist ihrerseits wiederum kommunikationstechnisch mit der Heizeinrichtung 18 gekoppelt.

Die mittels der Messeinrichtung 16 erfassten Messwerte werden in einer Vergleichsschaltung der Regelungseinrichtung 17 mit vorgebbaren Vergleichswerten verglichen. In Abhängigkeit des Vergleichsergebnisses erfolgt ein Betrieb der Heizeinrichtung 18, der mittels der Regelungseinrichtung 17 geregelt wird.

Im Unterschied zum vorbekannten Stand der Technik erfolgt gemäß der erfindungsgemäßen Ausgestaltung eine Regelung der Heizeinrichtung nicht nur in Abhängigkeit der Temperatur der Zuluft, sondern darüber hinaus auch in Abhängigkeit der Luftfeuchtigkeit der Abluft. Dies erlaubt einen energieoptimierten Betrieb der Heizeinrichtung 18, da ein Betrieb derselben nur dann stattfindet, wenn aufgrund des festgestellten Luftfeuchtigkeitsgehalts in der Abluft ein Vereisen der Lüftungseinheit 1 durch innerhalb der Lüftungseinheit 1 entstandenes Kondensat tatsächlich zu erwarten steht. Anderenfalls bleibt die Heizeinrichtung 18 außer Betrieb, und zwar im Unterschied zum Stand der Technik auch bei verhältnismäßig niedrigen Zulufttemperaturen.

Bezugszeichen:
- 1: Lüftungseinheit
- 2: Wärmetauscher
- 3: Ventilatoreinrichtung
- 4: Ventilator
- 5: Ventilator
- 6: Abluftkanal
- 7: Zuluftkanal
- 8: Zuluftseite
- 9: Abluftseite (Raumseite)
- 10: Pfeil
- 11: Pfeil
- 12: Temperatursensorzuluft
- 13: Luftfeuchtigkeitssensorzuluft
- 14: Temperatursensorabluft
- 15: Luftfeuchtigkeitssensorabluft
- 16: Messeinrichtung
- 17: Regelungseinrichtung
- 18: Heizeinrichtung
- 19: Kommunikationstechnische Verbindung

## Patentansprüche

1. Lüftungseinheit zur Versorgung eines Raumes oder eines Teils hiervon mit Zuluft, insbesondere Frischluft, im Austausch gegen Abluft, mit einer Ventilatoreinrichtung (3), einem Wärmetauscher (2) und einer Heizeinrichtung (18) für die Zuluft, **gekennzeichnet durch** eine Messeinrichtung (16), die Sensoren (12, 13, 14, 15) zur Detektion von Temperatur und Luftfeuchtigkeit aufweist, und durch eine Regelungseinrichtung (17), die mit einer Vergleichsschaltung die von der Messeinrichtung (16) detektierte Temperatur und Luftfeuchtigkeit mit vorgebbaren Vergleichswerten vergleicht und in Abhängigkeit des Verhältnisses von Temperatur und Luftfeuchtigkeit die Heizeinrichtung (18) für die Zuluft schaltet.

2. Lüftungseinheit nach Anspruch 1, **dadurch gekennzeichnet, dass** Sensoren (12, 13) zur Detektion der Temperatur und/oder der Luftfeuchtigkeit der Zuluft und/oder Sensoren (14, 15) zur Detektion der Temperatur und/oder Luftfeuchtigkeit der Abluft vorgesehen sind.

3. Lüftungseinheit nach einem der vorhergehenden Ansprüche, **dadurch gekennzeichnet, dass** die Sensoren (12, 13 und 14, 15) als Modul gekoppelt ausgebildet sind.

4. Lüftungseinheit nach einem der vorhergehenden Ansprüche, **dadurch gekennzeichnet, dass** die Heizeinrichtung (18) stufenlos schaltbar ausgebildet ist.

5. Verfahren zum Betrieb einer Lüftungseinheit nach einem der vorhergehenden Ansprüche 1 bis 4 zur Versorgung eines Raumes oder eines Teils hiervon mit Zuluft, insbesondere Frischluft, im Austausch gegen Abluft, bei dem mit einer Messeinrichtung (16) zumindest die Temperatur der Zuluft und die Luftfeuchtigkeit der Abluft detektiert werden und bei dem mittels einer Vergleichsschaltung die von der Messeinrichtung (16) detektierten Messwerte mit vorgebbaren Vergleichswerten verglichen werden und bei dem in Abhängigkeit des Vergleichsergebnisses der Vergleichseinrichtung die Heizeinrichtung (18) für die Zuluft geschaltet wird.

6. Verfahren nach Anspruch 5, **dadurch gekennzeichnet, dass** die Temperatur und die Luftfeuchtigkeit der Zuluft sowie die Temperatur und die Luftfeuchtigkeit der Abluft detektiert werden.

7. Verfahren zur Steuerung einer eine Ventilatoreinrichtung und einen Wärmetauscher umfassenden Lüftungseinheit nach einem der vorhergehenden Ansprüche 1 bis 4, bei dem der von der Ventilatoreinrichtung geförderte Luftstrom hinsichtlich seines Strömungsvolumens seiner Temperatur und seiner Luftfeuchte gemessen wird.

8. Verfahren nach Anspruch 7, bei dem die erfassten Messwerte in einer Vergleichsschaltung mit vorgebbaren Sollwerten verglichen werden und in Abhängigkeit der ermittelten Vergleichswerte eine Anpassung der Ventilatordrehzahl erfolgt.

9. Verfahren nach Anspruch 7 oder 8, bei dem anhand der erfassten Messwerte und/oder der ermittelten Vergleichswerte die Ventilatordrehzahl derart gewählt wird, dass sich eine möglichst geringe Luftfeuchtigkeitsdifferenz zwischen den beiden Luftseiten der Lüftungseinheit einstellt.

## Claims

1. A ventilation unit for supplying a room or a part thereof with incoming air, especially fresh air, in exchange for exhaust air, comprising a ventilator device (3), a heat exchanger (2) and a heating device (18) for the incoming air, **characterized by** a measuring device (16) which comprises sensors (12, 13, 14, 15) for detecting the temperature and the air humidity, and by a control system (17) which compares the temperature and the air humidity detected by the measuring device (16) with pre-determinable comparison values by means of a comparator circuit and operates the heating device (18) for the incoming air in dependence on the ratio between temperature and air humidity.

2. A ventilation unit according to claim 1, **characterized in that** sensors (12, 13) for detecting the temperature and/or the air humidity of the incoming air and/or sensors (14, 15) for detecting the temperature and/or the air humidity of the exhaust air are provided.

3. A ventilation unit according to one of the preceding claims, **characterized in that** the sensors (12, 13, 14, 15) are coupled to form a module.

4. A ventilation unit according to one of the preceding claims, **characterized in that** the heating device (18) can be switched continuously.

5. A method for operating a ventilation unit according to one of the preceding claims 1 through 4 for supplying a room or a part thereof with incoming air, especially fresh air, in exchange for exhaust air, in which method at least the temperature of the incoming air and the air humidity of the exhaust air will be detected by means of a measuring device (16) and in which the measurement values detected by the measuring device (16) will be compared with pre-determinable comparison values by means of a comparator circuit and in which the heating device (18) for the incoming air will be operated in dependence on the comparison result of the comparator circuit.

6. A method according to claim 5, **characterized in that** the temperature and the air humidity of the incoming air as well as the temperature and the air humidity of the exhaust air will be detected.

7. A method for controlling a ventilation unit comprising a ventilator device and a heat exchanger according to one of the preceding claims 1 through 4, in which the air flow supplied by the ventilator device will be measured with respect to the flow volume, the temperature and the air humidity thereof.

8. A method according to claim 7, in which the collected measurement values will be compared with pre-determinable target values in a comparator circuit and the rotational speed of the ventilator will be adapted in dependence on the determined comparison values.

9. A method according to claim 7 or 8, in which the rotational speed of the ventilator will be selected on the base of the collected measurement values and/or the determined comparison values, such that an air humidity difference which is as low as possible between the two air sides of the ventilation unit will be achieved.

## Revendications

1. Unité d'aération destinée à fournir de l'air entrant, notamment de l'air frais, à un espace ou à une partie de celui-ci, en échange de l'air évacué, comprenant un dispositif de ventilateur (3), un échangeur thermique (2) et un dispositif de chauffage (18) pour l'air entrant, **caractérisée par** un dispositif de mesure (16), qui comprend des capteurs (12, 13, 14, 15) pour détecter la température et l'humidité d'air, et par un dispositif de commande (17), qui compare la température et l'humidité d'air détectées par le dispositif de mesure (16) avec des valeurs comparatives par moyen d'un circuit de comparaison et actionne le dispositif de chauffage (18) pour l'air entrant en fonction du rapport entre la température et l'humidité d'air.

2. Unité d'aération selon la revendication 1, **caractérisée en ce que** les capteurs (12, 13) sont prévus pour détecter la température et/ou l'humidité d'air de l'air entrant et/ou des capteurs (14, 15) sont prévus pour détecter la température et l'humidité d'air de l'air évacué.

3. Unité d'aération selon l'une des revendications précédentes, **caractérisée en ce que** les capteurs (12, 13 et 14, 15) sont couplés comme un module.

4. Unité d'aération selon l'une des revendications précédentes, **caractérisée en ce que** le dispositif de chauffage (18) peut être commuté continûment.

5. Procédé d'actionnement d'une unité d'aération selon l'une des revendications précédentes 1 à 4 pour fournir de l'air entrant, notamment de l'air frais, à un espace ou à une partie de celui-ci en échange de l'air évacué, dans lequel au moins la température de l'air entrant et l'humidité d'air de l'air évacué sont détectées par un dispositif de mesure (16), et dans lequel les valeurs de mesure détectées par le dispositif de mesure (16) sont comparées avec des valeurs comparatives prédéterminables par moyen d'un circuit de comparaison et dans lequel le dispositif de chauffage (18) pour l'air entrant est réglé en fonction du résultat de comparaison du circuit de comparaison.

6. Procédé selon la revendication 5, **caractérisé en ce que** la température et l'humidité d'air de l'air entrant ainsi que la température et l'humidité d'air de l'air évacué sont détectées.

7. Procédé de commande d'une unité d'aération comprenant un dispositif de ventilateur et un échangeur thermique selon l'une des revendications précédentes 1 à 4, dans lequel le flux d'air fourni par le dispositif de ventilateur est mesuré par rapport à son débit de flux, à sa température et à son humidité d'air.

8. Procédé selon la revendication 7, dans lequel les valeurs de mesure détectées sont comparées avec des valeurs cibles prédéterminables dans un circuit de comparaison et la vitesse du ventilateur est adaptée en fonction des valeurs de comparaison déterminées.

9. Procédé selon la revendication 7 ou la revendication 8, dans lequel la vitesse du ventilateur est sélectionnée sur la base des valeurs de mesure détectées et/ou des valeurs de comparaison déterminées, de sorte qu'une différence d'humidité d'air aussi faible que possible entre les deux côtés d'air de l'unité d'aération est obtenue.
